**Europäisches Patentamt**

(19) **European Patent Office**

**Office européen des brevets**

(11) Numéro de publication: **0 069 346
B1**

(12) **FASCICULE DE BREVET EUROPEEN**

(45) Date de publication du fascicule du brevet:
**13.02.85**

(21) Numéro de dépôt: **82105870.8**

(22) Date de dépôt: **01.07.82**

(51) Int. Cl.⁴: **F 25 B 9/02,** G 05 D 23/02,
**F 25 B 41/06**

(54) **Dispositif de régulation d'un réfrigérateur à effet Joule Thomson.**

(30) Priorité: **07.07.81 FR 8113346**

(43) Date de publication de la demande:
**12.01.83 Bulletin 83/2**

(45) Mention de la délivrance du brevet:
**13.02.85 Bulletin 85/7**

(84) Etats contractants désignés:
**CH DE GB IT LI SE**

(56) Documents cités:
**EP - A - 0 005 048
EP - A - 0 020 111
FR - A - 2 021 106
FR - A - 2 136 023
FR - A - 2 265 048
FR - A - 2 322 336
FR - A - 2 477 406
US - A - 2 319 498
US - A - 2 418 671
US - A - 3 320 755
US - A - 3 322 345
US - A - 3 613 689**

(73) Titulaire: **SOCIETE ANONYME DE
TELECOMMUNICATIONS, 40 avenue de New York,
F-75116 Paris (FR)**

(72) Inventeur: **Albagnac, René Denis Michel, 34, rue de
Picpus, F-75012 Paris (FR)**
Inventeur: **Silly, Didier Jean-Pierre, 114, rue St. Allende,
F-92000 Nanterre (FR)**

(74) Mandataire: **Casalonga, Axel et al, BUREAU D.A.
CASALONGA OFFICE JOSSE & PETIT
Baaderstrasse 12-14, D-8000 München 5 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention se rapporte à un dispositif de régulation d'un réfrigérateur à effet Joule-Thomson, comprenant un conduit d'amenée d'un fluide réfrigérant sous pression auquel est raccordé un étrangleur débouchant dans une chambre de détente et réfrigération qui communique avec un passage d'échange thermique avec ledit conduit d'amenée, cet étrangleur étant soumis à une régulation covariante avec la température, c'est-à-dire faisant varier sa section de passage d'une manière décroissante en fonction de l'abaissement de la température de réfrigération en faisant appel à des différences de coefficients de dilatation de pièces constitutives du dispositif.

Un tel réfrigérateur peut être à circuit fermé ou ouvert, et il trouve notamment une application particulière en circuit ouvert pour les systèmes d'arme utilisant des projectiles à tête de guidage répondant aux infrarouges, dans laquelle est utilisée une cellule détectrice sensible, qui doit pouvoir être refroidie rapidement à basse température, en principe celle de liquéfaction du fluide réfrigérant, et pendant un certain temps, d'où l'intérêt d'une régulation telle que celle évoquée.

Ce type de régulation covariante est à distinguer soigneusement de la régulation classique contravariante des réfrigérateurs ordinaires, tel que décrit dans le document US-A-2 319 498, dans lesquels la section de passage varie en sens inverse de la température, la température prise en compte étant d'ailleurs celle du condensateur et non celle de l'évaporateur. Par ailleurs ce dispositif antérieur, ainsi que celui dans le document US-A-3 322 345, n'utilisent pas la dilatation homothétique d'une pièce rigide, mais au contraire une déformation plastique vers l'intérieur d'un corps élastomère à dilatation volumétrique importante dont la périphérie est maintenue dans un corps rigide.Il s'agit là d'un moyen d'amplification de l'effet de dilatation qui, de par son principe même, n'est utilisable que dans le sens contravariant.

On connaît déjà des régulations covariantes avec la température, comme celles décrites dans les documents EP-A-0 005 048 et US-A-3 320 755, mais l'effet de dilatation différentielle est toujours amplifié, soit pour l'un par l'utilisation de la dilatation longitudinale de pièces cylindriques longues dont la dilatation diamétrale est sans effet, soit pour l'autre en utilisant la déformation en flexion de pièces bimétalliques ou bilames.

La présente invention a pour objet un dispositif de régulation de réalisation particulièrement simple, ayant en outre le mérite d'être particulièrement peu encombrant et très adapté à la miniaturisation recherchée dans les applications précitées à bord de projectiles.

Essentiellement, à cet effet, dans un réfrigérateur à effet Joule Thomson du genre prédéfini, le dispositif de régulation selon l'invention est caractérisé par le fait que ladite section de passage de cet étrangleur est constituée essentiellement par une section de passage annulaire étroite comprise entre un corps interne rigide de révolution et un Alésage pratiqué dans un corps tubulaire également rigide, raccordé audit conduit d'amenée, alésage dans lequel est introduit et retenu en butée ledit corps interne avec un jeu diamétral réduit, le coefficient de dilatation linéaire du corps interne étant inférieur à celui du corps tubulaire de manière que ladite section de passage soit co-variante avec la température.

En particulier ledit alésage peut être cylindrique et ledit corps interne introduit librement dans ledit alésage, avec un jeu axial important en plus du jeu diamétral, en étant seulement retenu contre l'entraînement par le fluide par une butée sans précision.

Le corps interne peut alors avantageusement être constitué par une bille pouvant jouer et tourner librement sans conséquences sur le débit. Enfin, dans le cas où il est cylindrique, le corps interne peut comporter selon une génératrice un plat ou une entaille élargissant localement la section de passage annulaire et définissant la section de passage totale minimale.

Deux formes de réalisation d'un dispositif selon l'invention sont d'ailleurs ci-après décrites à titre d'exemple et en référence au dessin annexé, dans lequel:

la fig. 1 est une vue partielle en coupe axiale d'un réfrigérateur à effet Joule Thomson pourvu d'un dispositif de régulation selon l'invention;

la fig. 2 est une autre vue partielle en coupe axiale d'un tel réfrigérateur illustrative d'une variante de réalisation du dispositif de régulation;

la fig. 3 est une vue en coupe partielle suivant III-III de la fig. 2.

Le réfrigérateur représenté comprend un vase de Dewar à double paroi 1, 2 dont la paroi de fond interne 2a est pourvue, face à la paroi de fond 1a laissant passer le rayonnement infrarouge dans l'axe du Dewar, d'une cellule détectrice 3 sensible aux infrarouges et à conducteurs de connexion non représentés sortant de l'enceinte sous vide du Dewar et destinés à être raccordés au circuit électronique de détection.

A l'intérieur de la paroi interne du Dewar est disposé un conduit d'amenée de fluide réfrigérant sous haute pression, désigné par 4 dans son ensemble, et ici constitué d'un élément tubulaire coudé à deux branches 4a, 4b respectivement enroulées en hélice autour d'une douille 5 à fond fermé 5a. La partie coudée est pourvue d'un conduit 6 raccordé, par exemple par soudure en 7, à une buse 8 de détente, pourvue d'un organe d'étranglement 9 retenu en butée par une goupille 10 et qui débouche dans une chambre de réfrigération 11, constituée par la partie libre du fond de la paroi interne du Dewar que n'occupe pas l'ensemble 4 à 10.

Le fluide réfrigérant détendu dans la chambre 11 est ensuite amené à sortir du Dewar après échange thermique avec le fluide amené par le conduit 4 en s'écoulant dans l'intervalle laissé libre par ce dernier entre la paroi interne 2 du Dewar et la douille 5. Deux joncs élastiques souples non représentés peuvent être enroulés dans les creux d'hélice entre chaque branche 4a, 4b du tube pour faire étanchéité avec la paroi interne 2 du Dewar et contraindre le fluide détendu à suivre notamment le parcours hélicoïdal des enroulements du conduit 4.

La régulation de débit et donc la puissance frigorifique obtenue résulte ici du choix pour la buse 8 et l'organe d'étranglement 9 de deux matériaux à coefficient de dilation différent. Par exemple, on peut choisir les couples suivants: buse en alliage d'aluminium et organe d'étranglement en acier; ou buse en acier et organe d'étranglement en verre; ou encore buse en laiton et organe d'étranglement en saphir.

Ainsi, avec une buse à coefficient de dilation supérieur à celui de l'organe d'étranglement, on peut obtenir en fonctionnement un débit initial relativement rapide du fluide réfrigérant sous la pression de sa source non représentée, par le choix d'un jeu initial prédéterminé existant à température ambiante entre la buse et l'étrangleur, et qui va donc aller décroissant avec la température de réfrigération atteinte, jusqu'à une valeur de section de passage résiduelle pouvant être prédéterminée en fonction de la température de liquéfaction du fluide. utilisé et conditionnant la puissance frigorifique d'entretien ou de croisière du dispositif.

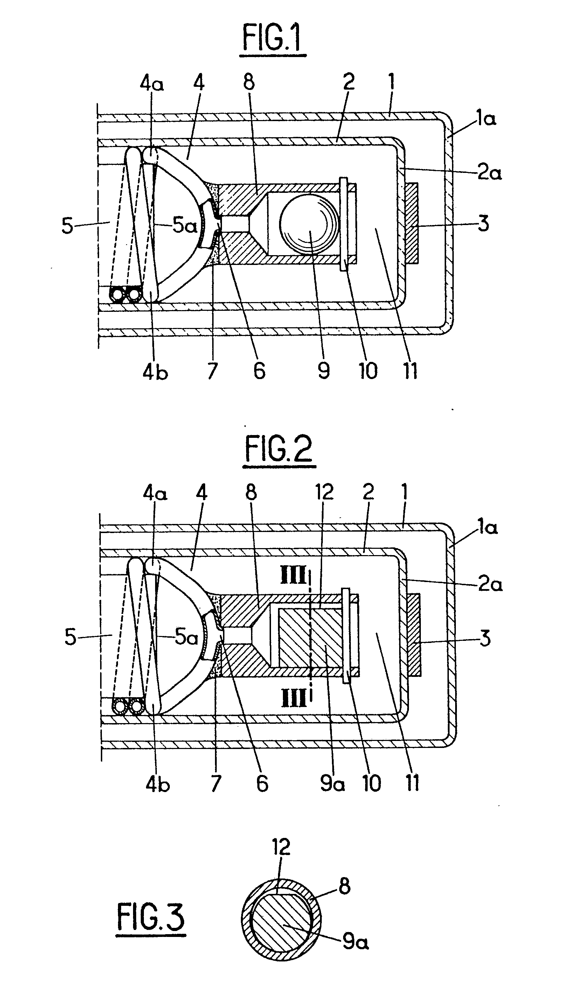

Il convient évidemment de disposer dans l'exemple de la fig. 1 d'une buse dont l'alésage est usiné avec précision de même que la bille utilisée comme étrangleur doit être calibrée avec précision.

Les fig. 2 et 3 illustrent une réalisation préférée de l'ensemble buse-étrangleur particulièrement adaptée pour obtenir aisément bien qu'avec précision une excellente maîtrise de la régulation désirée.

A cet effet, l'organe d'étranglement 9a est constitué dans sa majeure partie sous forme d'un cylindre monté avec jeu dans la buse 8 et présentant un plat 12, qui est destiné à délimiter avec la buse, à la température de réfrigération désirée, une section de passage résiduelle pour laquelle la buse sera venue enserrer la partie cylindrique de cet étrangleur, et qui peut être prédéterminée avec précision tout en correspondant à une section favorable à la non obstruction de ce passage par des impuretés éventuelles du fluide réfrigérant. Cette section de passage résiduelle peut aussi être constituée par une entaille choisie de façon à lui donner une section plus régulière selon les impuretés à craindre.

Bien entendu d'autres variantes peuvent encore être imaginées tout en restant dans le cadre de l'invention.

## Revendications

1. Dispositif de régulation d'un réfrigérateur à effet Joule-Thomson comprenant un conduit d'amenée d'un fluide réfrigérant sous pression auquel est raccordé un étrangleur débouchant dans une chambre de détente et réfrigération communiquant avec un passage d'échange thermique avec ledit conduit d'amenée, cet étrangleur étant soumis à une régulation faisant varier sa section de passage d'une manière décroissante en fonction de l'abaissement de la température de réfrigération en faisant appel à des différences de coefficients de dilatation de pièces constitutives du dispositif, caractérisé par le fait que ladite section de passage de cet étrangleur est constituée essentiellement par une section de passage annulaire étroite comprise entre un corps interne rigide de révolution (9; 9a) et un alésage pratiqué dans un corps tubulaire (8) également rigide, raccordé audit conduit d'amenée, alésage dans lequel est introduit et retenu en butée ledit corps interne avec un jeu diamétral réduit, le coefficient de dilation linéaire du corps interne (9; 9a) étant inférieur à celui du corps tubulaire (8) de manière que ladite section de passage soit co-variante avec la température.

2. Dispositif de régulation selon la revendication 1, caractérisé par le fait que ledit alésage est cylindrique et que ledit corps interne (9; 9a) est introduit librement dans ledit alésage, avec un jeu axial important en plus du jeu diamétral, en étant seulement retenu contre l'entraînement par le fluide par une butée sans précision.

3. Dispositif de régulation selon la revendication 2, caractérisé par le fait que le corps interne est constitué par une bille (9) pouvant jouer et tourner librement sans conséquences sur le débit.

4. Dispositif de régulation selon la revendication 2, caractérisé par le fait que le corps interne (9a) comporte selon une génératrice un plat ou une entaille (12) élargissant localement la section de passage annulaire et définissant la section de passage totale minimale.

## Patentansprüche

1. Regelvorrichtung für eine nach dem Joule-Thomson-Effekt arbeitende Kühleinrichtung, enthaltend eine Speiseleitung für eine Kühlflüssigkeit unter Druck, an die eine Drossel angeschlossen ist, die in eine Entspannungs- und Kühlkammer mündet, mit einem Wärmetauscher mit der genannten Speiseleitung, wobei diese Drossel einer Regelung unterliegt, die ihren Strömungsquerschnitt in Abhängigkeit vom Absinken der Kühltemperatur in Richtung auf Verengung regelt, und zwar gesteuert durch die unterschiedlichen Ausdehnungskoeffizienten der einzelnen Bestandteile der Vorrichtung, dadurch gekennzeichnet, daß der genannte Strömungsquerschnitt der Drossel im wesentlichen aus einem engen Ringspalt zwischen einem inneren starren Rotationskörper (9, 9a) und einer Bohrung in einem an die genannte Speiseleitung angeschlossenen ebenfalls starren Rohrkörper (8) gebildet wird, in die der genannte Innenkörper mit einem kleineren Radikalspiel eingesetzt wird und im Anschlag gehalten wird, wobei der lineare Ausdehnungskoeffizient des Innenkörpers (9, 9a) geringer als der des Röhrenkörpers (8) ist, so daß sich der genannte Strömungsquerschnitt gleichsinnig mit der Temperatur ändert.

2. Regelvorrichtung gemäß Anspruch 1, dadurch gekennzeichnet, daß die genannte Bohrung zylindrisch ist und der genannte Innenkörper (9, 9a) mit einem großen Axialspiel zusätzlich zum Radialspiel frei in die genannte Bohrung eingeführt wird und ausschließlich durch einen ohne Präzision ausgeführten Anschlag gegen Mitnahme durch die Mühlflüssigkeit gehalten wird.

3. Regelvorrichtung gemäß Anspruch 2, dadurch gekennzeichnet, daß der Innenkörper aus einer Kugel (9) besteht, die ohne Auswirkung auf den Durchsatz frei spielen und sich drehen kann.

4. Regelvorrichtung gemäß Anspruch 2, dadurch gekennzeichnet, daß der Innenkörper (9a) in der Mantellinie eine Abflachung oder eine Kerbe (12) enthält, die den Ringspaltquerschnitt, der den gesamten Mindestströmungsquerschnitt definiert, örtlich vergrößert.

## Claims

1. A device for regulating a Joule-Thomson effect refrigerator comprising an inlet duct for a refrigerating fluid under pressure to which a choke is connected which opens into an expansion and refrigeration chamber connecting with a passage for heat exchange with the said inlet duct, this choke being regulated to provide a decreasing flow as the refrigeration temperature drops by applying differences in the coefficients of expansion of the components making up the device, characterized in that the cross-sectional area of the said choke passage consists basically of a narrow annular passage cross-section included between a rigid inner body of revolution (9; 9a) and a bore made inside a tubular body (8) which is also rigid, connected to the said inlet duct, into which bore the said inner body is inserted and restrained axially with limited diametral clearance, the linear coefficient of expansion on the inner body (9; 9a) being less that that of the tubular body (8) so that the said passage cross-section varies according a covariation with temperature.

2. The regulating device according to claim 1, characterized in that the said bore is cylindrical and in that the said inner body (9; 9a) is inserted freely in the said bore with considerable axial play in addition to the diametral clearance, being only restrained from being entrained by the fluid by a stop with no precise position.

3. The regulating device according to claim 2, characterized in that the inner body consists of a ball (9) which can move and rotate freely without affecting the flow.

4. The regulating device according to claim 2, characterized in that the inner body (9a) has a flat or a notch (12) along an (axial) generating line which locally widens the cross-section of the annular passage and delimits the minimum overall passage cross-section.

## FIG.1

## FIG.2

## FIG.3

5